# NOUVEAU FASCICULE DE BREVET EUROPEEN

(11) **EP 3 590 714 B2**
(45) Date de publication et mention de la décision concernant l'opposition: **22.01.2025**
(45) Mention de la délivrance du brevet: 09.02.2022
(21) Numéro de dépôt: 19180083.8
(22) Date de dépôt: 13.06.2019
(51) Int. Cl.: B32B 37/04, B29D 24/00, B32B 3/00, B64D 11/00

(54) **PROCÉDÉ DE RÉALISATION D'UN PANNEAU COMPOSITE**
HERSTELLUNGSVERFAHREN EINES VERBUNDPANEELS UND DURCH DIESES VERFAHREN ERZEUGTES VERBUNDPANEEL
METHOD FOR MANUFACTURING A COMPOSITE PANEL AND COMPOSITE PANEL OBTAINED BY SAID METHOD

(30) Priorité: 14.06.2018 FR 1855230
(43) Date de publication de la demande: 08.01.2020
(60) Demande divisionnaire: 21217359.5
(73) Titulaire: Cath'Air, 33160 Saint-Medard-en-Jalles (FR)
(72) Inventeur: CATHERINEAU, Marie, 33000 BORDEAUX (FR); CATHERINEAU, Anne-Sophie, 33290 LE PIAN-MEDOC (FR)
(74) Mandataire: Ipside

(56) Documents cités:
- DE-A1- 102013 214 391
- FR-A1- 2 962 362
- US-A- 2 456 005

## Description

### Domaine de l'invention

La présente invention se rapporte au domaine des panneaux composites, notamment destinés au mobilier avion ou nautique.

La présente invention concerne plus particulièrement un procédé de réalisation d'un panneau composite.

### Etat de la technique

Les panneaux en composite sont désormais couramment utilisés pour le mobilier avion ou le mobilier nautique.

On connaît notamment dans l'état de la technique le brevet français N° FR 2 563 153 B1, qui se rapporte à un panneau composite, notamment destiné au mobilier avion. L'objet de cette invention de l'état de la technique est un panneau composite comprenant une âme centrale formée d'un panneau du type nid d'abeilles revêtu sur ses deux faces d'au moins une couche de tissu préimprégné de résine appropriée, dans lequel au moins l'une des faces dudit panneau ainsi revêtu est recouverte d'un placage de bois mince mis en place par simple pression à chaud, l'ensemble âme central + tissus + placage, étant assemblé et solidarisé au cours d'une seule et même opération.

On connaît également dans l'état de la technique le brevet français N° FR 2 872 085 B1, qui se rapporte à un panneau composite pour mobilier avion. L'objet de cette invention de l'état de la technique est un panneau composite, notamment destiné au mobilier avion, comprenant une âme centrale formée d'un panneau du type nid d'abeilles revêtu sur ses deux faces d'au moins une couche de tissu préimprégné de résine appropriée, au moins l'une des faces dudit panneau étant recouverte d'un placage de bois mince, dans lequel, entre ledit placage de bois mince et ladite couche de tissu préimprégné sont interposées une couche d'une mousse de matière plastique rigide et une seconde couche de tissu préimprégné de résine, la couche de mousse étant interposée entre les deux couches de tissu, l'ensemble étant assemblé et solidarisé sous pression et à chaud au cours d'une seule et même opération.

On connaît également dans l'état de la technique le brevet français N° FR 2 962 362 B1, qui se rapporte à un panneau composite pour mobilier avion. L'objet de cette invention de l'état de la technique est un panneau composite, notamment destiné au mobilier avion, comprenant une âme centrale formée d'un panneau du type nid d'abeilles revêtu sur ses deux faces d'au moins une couche de tissu préimprégné de résine appropriée, au moins l'une des deux faces dudit panneau étant recouverte d'un placage de bois mince, l'ensemble étant assemblé et solidarisé sous pression et à chaud au cours d'une seule et même opération. Selon cette invention de l'état de la technique, entre ledit placage de bois mince et ladite couche de tissu préimprégné est interposé un film d'aluminium, ledit film d'aluminium étant solidarisé sur l'une des faces dudit placage de bois au moyen d'une couche de colle.

Pour certains types de placage poreux, des remontées de résine du tissu préimprégné peuvent apparaître sur la face visible du placage lors de la cuisson en une seule étape décrite dans le brevet N° FR 2 563 153 B1.

### Exposé de l'invention

La présente invention entend remédier aux inconvénients de l'art antérieur en proposant un procédé de réalisation d'un panneau composite, notamment destiné au mobilier avion ou nautique, permettant de créer une barrière étanche sur la face en contact avec le matériau préimprégné de résine, tout en minimisant l'impact sur la masse du panneau composite et en assurant un meilleur collage du placage sur le panneau.

A cet effet, la présente invention concerne, dans son acception la plus générale, un procédé de réalisation d'un panneau composite, notamment destiné au mobilier avion ou nautique, ledit panneau composite comportant une âme centrale formée d'un cœur de type matériau structuré à faible densité revêtu sur ses deux faces d'au moins une couche de matériau préimprégné de résine, au moins l'une des faces dudit panneau étant recouverte d'un placage, comportant les deux étapes de fabrication suivantes :
- cuisson dudit placage avec un film de colle, ledit film de colle se collant sur l'une des faces dudit placage ; et
- cuisson dudit placage et du film de colle sur ladite au moins une couche de matériau préimprégné de résine.

Le procédé selon la présente invention permet de créer une barrière étanche sur la face en contact avec le matériau préimprégné de résine afin d'éviter les remontées de résine sur des placages.

Le procédé selon la présente invention permet d'assurer une meilleure adhésion du placage sur le sandwich par l'ajout d'un film de colle participant à la tenue du placage sur le panneau composite.

Le procédé selon la présente invention permet de minimiser l'impact sur la masse du panneau composite en ajoutant uniquement un film de colle de part et d'autre du panneau composite.

Il permet un gain de masse de 30 % par rapport aux fabrications traditionnelles où l'assemblage décoratif de couches de placage est rapporté à froid en collage néoprène dans un deuxième temps.

Selon une des variantes de l'invention, l'ajout d'aluminium entre deux films de colle dans le panneau composite permet d'améliorer la rigidité du panneau composite et sa tenue au feu.

Le procédé objet de l'invention permet de réaliser des panneaux de structure et des panneaux décoratifs.

Avantageusement, le collage dudit film de colle est réalisé par pression à chaud sur l'une des faces dudit placage.

Selon un mode de réalisation, ledit matériau structuré à faible densité est de type nid d'abeilles.

Selon un autre mode de réalisation, ledit matériau structuré à faible densité est de type mousse.

Selon un mode de réalisation, l'étape de cuisson dudit placage avec ledit film de colle est réalisée à une température comprise entre 110°C et 165°C.

Selon un mode de mise en œuvre particulier, l'étape de cuisson dudit placage avec ledit film de colle est réalisée à une température comprise entre 110°C et 140°C.

Selon un mode de réalisation, l'étape de cuisson dudit placage avec ledit film de colle est d'une durée comprise entre 20 secondes et 30 minutes.

Selon un mode de mise en œuvre particulier, l'étape de cuisson dudit placage avec ledit film de colle est d'une durée comprise entre 2 minutes et 10 minutes.

Selon un mode de réalisation, l'étape de cuisson dudit placage avec ledit film de colle est réalisée dans une presse à compression à chaud sous une pression comprise entre 12 et 25 bar.

Selon un mode de réalisation, l'étape de cuisson dudit placage et du film de colle sur ladite au moins une couche de matériau préimprégné de résine est réalisée à une température comprise entre 100°C et 150°C.

Selon un mode de mise en œuvre particulier, l'étape de cuisson dudit placage et du film de colle sur ladite au moins une couche de matériau préimprégné de résine est réalisée à une température comprise entre 125°C et 135°C.

Selon un mode de réalisation, l'étape de cuisson dudit placage et du film de colle sur ladite au moins une couche de matériau préimprégné de résine est d'une durée comprise entre 20 et 360 minutes.

Selon un mode de mise en œuvre particulier, l'étape de cuisson dudit placage et du film de colle sur ladite au moins une couche de matériau préimprégné de résine est d'une durée comprise entre 90 et 120 minutes.

Selon un mode de réalisation, l'étape de cuisson dudit placage et du film de colle sur ladite au moins une couche de matériau préimprégné de résine est réalisée dans une presse à compression à chaud sous une pression comprise entre 0.3 et 5 bar.

Selon un autre mode de réalisation, l'étape de cuisson dudit placage et du film de colle sur ladite au moins une couche de matériau préimprégné de résine est réalisée dans une étuve.

Selon un autre mode de réalisation, l'étape de cuisson dudit placage et du film de colle sur ladite au moins une couche de matériau préimprégné de résine est réalisée dans un autoclave.

Selon un mode de réalisation, ledit placage est en bois d'une épaisseur de quelques dixièmes de millimètres.

De préférence, ledit placage en bois est d'une épaisseur comprise entre 0,4 mm et 1 mm.

Selon un mode de réalisation, entre ledit placage et ladite couche de matériau préimprégné est interposé un film d'aluminium d'une épaisseur de quelques dixièmes de millimètres.

De préférence, ledit film d'aluminium est d'une épaisseur comprise entre 0,05 mm et 0,2 mm.

Selon une variante, ledit procédé comporte en outre une étape d'ajout d'un agent imprégnant ignifugeant.

Selon un mode de réalisation, ladite couche de matériau préimprégné est composée de tissus.

Selon un autre mode de réalisation, ladite couche de matériau préimprégné est composée de nappes unidirectionnelles.

Avantageusement, ladite couche de matériau préimprégné est composée de fibres de type dans le groupe suivant : verre, hybrides, carbone, aramide, lin, bambou et chanvre.

Selon un autre mode de réalisation, ledit procédé est mis en œuvre pour des panneaux composites en forme.

### Brève description des dessins

On comprendra mieux l'invention à l'aide de la description, faite ci-après à titre purement explicatif, d'un mode de réalisation de l'invention, en référence aux Figures dans lesquelles :
- La Figure 1 illustre le procédé selon la présente invention ;
- La Figure 2 représente un panneau composite obtenu par la mise en œuvre du procédé selon la présente invention ; et
- La Figure 3 représente une variante du panneau composite obtenu par la mise en œuvre du procédé selon la présente invention.

### Description détaillée de modes de réalisation de l'invention

La présente invention se rapporte à un procédé de réalisation d'un panneau composite 10, notamment destiné au mobilier avion ou nautique, ledit panneau composite 10 comportant une âme centrale 11 formée d'un cœur 12 de type matériau structuré à faible densité revêtu sur ses deux faces d'au moins une couche 13 de matériau préimprégné de résine, au moins l'une des faces dudit panneau 10 étant recouverte d'un placage 14. Le procédé selon la présente invention comporte les deux étapes de fabrication suivantes :
- cuisson dudit placage 14 avec un film de colle 15, ledit film 15 de colle se collant sur l'une des faces dudit placage 14 ; et
- cuisson dudit placage 14 et du film de colle 15 sur ladite au moins une couche 13 de matériau préimprégné de résine.

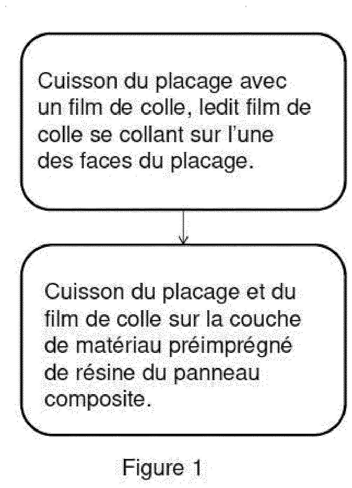

La Figure 1 illustre les différentes étapes du procédé selon la présente invention.

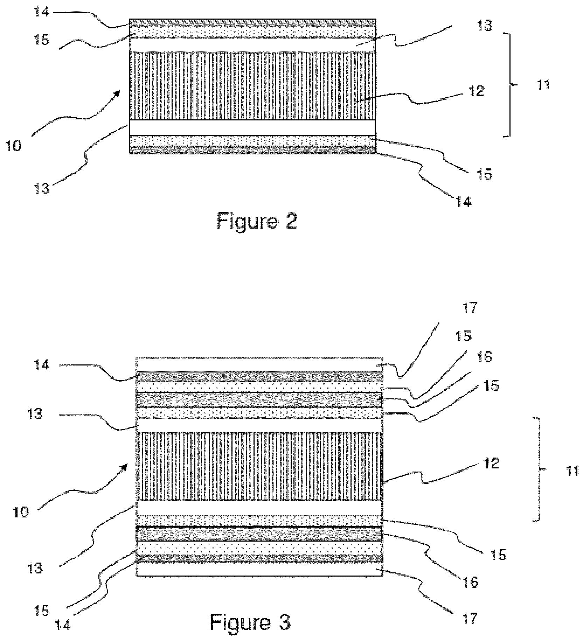

La Figure 2 représente un panneau composite 10 obtenu par la mise en œuvre du procédé selon la présente invention.

On observe sur la Figure 2 un panneau composite 10 comportant une âme centrale 11 formée d'un cœur 12 de type matériau structuré à faible densité revêtu sur ses deux faces d'au moins une couche 13 de matériau préimprégné de résine, au moins l'une des faces dudit panneau 10 étant recouverte d'un placage 14. On observe également sur la Figure 2 un film de colle 15, ledit film 15 de colle se collant sur l'une des faces dudit placage 14.

La Figure 3 représente une variante du panneau composite obtenu par la mise en œuvre du procédé selon la présente invention.

On observe sur la Figure 3 un panneau composite 10 comportant une âme centrale 11 formée d'un cœur 12 de type matériau structuré à faible densité revêtu sur ses deux faces d'au moins une couche 13 de matériau préimprégné de résine, au moins l'une des faces dudit panneau 10 étant recouverte d'un placage 14. On observe également sur la Figure 3 un film de colle 15, ledit film 15 de colle se collant sur l'une des faces dudit placage 14. De plus, dans le panneau composite 10 illustré Figure 3, un film d'aluminium 16 est interposé entre ledit placage 14 et ladite couche 13 de matériau préimprégné. Un agent imprégnant ignifugeant 17 est également représenté Figure 3.

Le procédé selon la présente invention permet de créer une barrière étanche sur la face en contact avec le matériau préimprégné de résine afin d'éviter les remontées de résine sur les placages.

Le procédé selon la présente invention permet également d'assurer un meilleur collage du placage sur le sandwich.

Le procédé objet de l'invention permet de réaliser des panneaux de structure et des panneaux décoratifs.

Dans un mode de réalisation, le collage dudit film de colle 15 sur l'une des faces dudit placage 14 est réalisé par pression à chaud.

Le matériau structuré à faible densité peut être de type nid d'abeilles, ou de type mousse.

L'étape de cuisson dudit placage 14 avec le film de colle 15 est réalisée à une température comprise entre 110°C et 165°C, préférentiellement entre 110°C et 140°C, et est d'une durée comprise entre 20 secondes et 30 minutes, préférentiellement entre 2 et 10 minutes.

Dans un mode de réalisation, l'étape de cuisson dudit placage 14 avec ledit film de colle 15 est réalisée dans une presse à compression à chaud sous une pression comprise entre 12 et 25 bar.

L'étape de cuisson dudit placage 14 et du film de colle 15 sur ladite au moins une couche 13 de matériau préimprégné de résine est réalisée à une température comprise entre 100°C et 150°C, préférentiellement entre 125°C et 135°C et est d'une durée comprise entre 20 et 360 minutes, préférentiellement entre 90 et 120 minutes.

Cette étape de cuisson est réalisée soit dans une presse à compression à chaud sous une pression comprise entre 0.3 et 5 bar, soit dans une étuve, ou encore dans un autoclave.

Le placage 14 est en bois d'une épaisseur de quelques dixièmes de millimètres, préférentiellement entre 0,4 mm et 1 mm.

Dans un mode de réalisation, entre ledit placage 14 et ladite couche 13 de matériau préimprégné est interposé un film d'aluminium 16 d'une épaisseur de quelques dixièmes de millimètres, préférentiellement entre 0,05 mm et 0,2 mm.

Dans un mode de réalisation avantageux, ledit procédé comporte en outre une étape d'ajout d'un agent imprégnant ignifugeant 17.
La couche 13 de matériau préimprégné est composée soit de tissus, soit de nappes unidirectionnelles.

La couche 13 de matériau préimprégné est composée soit de tissus, soit de nappes unidirectionnelles.

La couche 13 de matériau préimprégné est composée de fibres de type dans le groupe suivant : verre, hybrides, carbone, aramide, lin, bambou et chanvre.

Selon un autre mode de réalisation, ledit procédé est mis en œuvre pour des panneaux composites en forme.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de réalisation d'un panneau composite (10), notamment destiné au mobilier avion ou nautique, ledit panneau composite (10) comportant une âme centrale (11) formée d'un coeur (12) de type matériau structuré à faible densité revêtu sur ses deux faces d'au moins une couche (13) de matériau préimprégné de résine, au moins l'une des faces dudit panneau (10) étant recouverte d'un placage (14), **caractérisé en ce qu'**il comporte les deux étapes de fabrication suivantes :
- cuisson dudit placage (14) avec un film de colle (15), ledit film (15) de colle se collant sur l'une des faces dudit placage (14) ; et
- cuisson dudit placage (14) et du film de colle (15) sur ladite au moins une couche (13) de matériau préimprégné de résine.

2. Procédé de réalisation d'un panneau composite (10) selon la revendication 1, **caractérisé en ce que** le collage dudit film de colle (15) sur l'une des faces dudit placage (14) est réalisé par pression à chaud.

3. Procédé de réalisation d'un panneau composite (10) selon la revendication 1 ou 2, **caractérisé en ce que** ledit matériau structuré à faible densité (12) est de type nid d'abeilles.

4. Procédé de réalisation d'un panneau composite (10) selon la revendication 1 ou 2, **caractérisé en ce que** ledit matériau structuré à faible densité (12) est de type mousse.

5. Procédé de réalisation d'un panneau composite (10) selon l'une des revendications précédentes, **caractérisé en ce que** l'étape de cuisson dudit placage (14) avec ledit film de colle (15) est réalisée à une température comprise entre 110°C et 165°C.

6. Procédé de réalisation d'un panneau composite (10) selon la revendication 5, **caractérisé en ce que** l'étape de cuisson dudit placage (14) avec ledit film de colle (15) est réalisée à une température comprise entre 110°C et 140°C.

7. Procédé de réalisation d'un panneau composite (10) selon l'une des revendications précédentes, **caractérisé en ce que** l'étape de cuisson dudit placage (14) avec ledit film de colle (15) est d'une durée comprise entre 20 secondes et 30 minutes.

8. Procédé de réalisation d'un panneau composite (10) selon la revendication 7, **caractérisé en ce que** l'étape de cuisson dudit placage (14) avec ledit film de colle (15) est d'une durée comprise entre 2 minutes et 10 minutes.

9. Procédé de réalisation d'un panneau composite (10) selon l'une des revendications précédentes, **caractérisé en ce que** l'étape de cuisson dudit placage (14) avec ledit film de colle (15) est réalisée dans une presse à compression à chaud sous une pression comprise entre 12 et 25 bar.

10. Procédé de réalisation d'un panneau composite (10) selon l'une des revendications précédentes, **caractérisé en ce que** l'étape de cuisson dudit placage (14) et du film de colle (15) sur ladite au moins une couche (13) de matériau préimprégné de résine est réalisée à une température comprise entre 100°C et 150°C.

11. Procédé de réalisation d'un panneau composite (10) selon la revendication 10, **caractérisé en ce que** l'étape de cuisson dudit placage (14) et du film de colle (15) sur ladite au moins une couche (13) de matériau préimprégné de résine est réalisée à une température comprise entre 125°C et 135°C.

12. Procédé de réalisation d'un panneau composite (10) selon l'une des revendications précédentes, **caractérisé en ce que** l'étape de cuisson dudit placage (14) et du film de colle (15) sur ladite au moins une couche (13) de matériau préimprégné de résine est d'une durée comprise entre 20 et 360 minutes.

13. Procédé de réalisation d'un panneau composite (10) selon la revendication 12, **caractérisé en ce que** l'étape de cuisson dudit placage (14) et du film de colle (15) sur ladite au moins une couche (13) de matériau préimprégné de résine est d'une durée comprise entre 90 et 120 minutes.

14. Procédé de réalisation d'un panneau composite (10) selon l'une des revendications précédentes, **caractérisé en ce que** l'étape de cuisson dudit placage (14) et du film de colle (15) sur ladite au moins une couche (13) de matériau préimprégné de résine est réalisée dans une presse à compression à chaud sous une pression comprise entre 0.3 et 5 bar.

15. Procédé de réalisation d'un panneau composite (10) selon l'une des revendications 1 à 13, **caractérisé en ce que** l'étape de cuisson dudit placage (14) et du film de colle (15) sur ladite au moins une couche (13) de matériau préimprégné de résine est réalisée dans une étuve.

16. Procédé de réalisation d'un panneau composite (10) selon l'une des revendications 1 à 13, **caractérisé en ce que** l'étape de cuisson dudit placage (14) et du film de colle (15) sur ladite au moins une couche (13) de matériau préimprégné de résine est réalisée dans un autoclave.

17. Procédé de réalisation d'un panneau composite (10) selon l'une des revendications précédentes, **caractérisé en ce que** ledit placage (14) est en bois d'une épaisseur de quelques dixièmes de millimètres.

18. Procédé de réalisation d'un panneau composite (10) selon la revendication 17, **caractérisé en ce que** ledit placage (14) en bois est d'une épaisseur comprise entre 0,4 mm et 1 mm.

19. Procédé de réalisation d'un panneau composite (10) selon l'une des revendications précédentes, **caractérisé en ce qu'**entre ledit placage (14) et ladite couche (13) de matériau préimprégné est interposé un film d'aluminium (16) d'une épaisseur de quelques dixièmes de millimètres.

20. Procédé de réalisation d'un panneau composite (10) selon la revendication 19, **caractérisé en ce que** ledit film d'aluminium (16) est d'une épaisseur comprise entre 0,05 mm et 0,2 mm.

21. Procédé de réalisation d'un panneau composite (10) selon l'une des revendications précédentes, **caractérisé en ce qu'**il comporte en outre une étape d'ajout d'un agent imprégnant ignifugeant (17).

22. Procédé de réalisation d'un panneau composite (10) selon l'une des revendications précédentes, **caractérisé en ce que** ladite couche (13) de matériau préimprégné est composée de tissus.

23. Procédé de réalisation d'un panneau composite (10) selon l'une des revendications 1 à 21, **caractérisé en ce que** ladite couche (13) de matériau préimprégné est composée de nappes unidirectionnelles.

24. Procédé de réalisation d'un panneau composite (10) selon l'une des revendications 1 à 21, **caractérisé en ce que** ladite couche (13) de matériau préimprégné est composée de fibres de type dans le groupe suivant : verre, hybrides, carbone, aramide, lin, bambou et chanvre.

## Patentansprüche

1. Herstellungsverfahren einer Verbundplatte (10), insbesondere für Flugzeug- oder Schiffsmöbel, wobei die Verbundplatte (10) einen zentralen Kern (11) aufweist, das aus einem Herz (12) vom Materialtyp mit einer Struktur geringer Dichte gebildet ist, das auf seinen zwei Seiten mit mindestens einer Schicht (13) eines mit Harz vorimprägnierten Materials beschichtet ist, wobei mindestens eine der Seiten der Platte (10) mit einem Furnier (14) bedeckt ist, **dadurch gekennzeichnet, dass** es die zwei folgenden Herstellungsschritte aufweist:
- Tempern des Furniers (14) mit einem Leimfilm (15), wobei der Film (15) an einer der Seiten des Furniers (14) haftet; und
- Tempern des Furniers (14) und des Leimfilms (15) auf der mindestens einen Schicht (13) aus mit Harz vorimprägniertem Material.

2. Herstellungsverfahren einer Verbundplatte (10) nach Anspruch 1, **dadurch gekennzeichnet, dass** die Klebung des Leimfilms (15) auf einer der Seiten des Furniers (14) durch Heißpressen durchgeführt wird.

3. Herstellungsverfahren einer Verbundplatte (10) nach Anspruch 1 oder 2, **dadurch gekennzeichnet, dass** das Material mit einer Struktur geringer Dichte (12) vom Typ einer Wabenstruktur ist.

4. Herstellungsverfahren einer Verbundplatte (10) nach Anspruch 1 oder 2, **dadurch gekennzeichnet, dass** das Material mit einer Struktur geringer Dichte (12) vom Typ eines Schaumstoffs ist.

5. Herstellungsverfahren einer Verbundplatte (10) nach einem der vorhergehenden Ansprüche, **dadurch gekennzeichnet, dass** der Schritt des Temperns des Furniers (14) mit dem Leimfilm (15) bei einer Temperatur zwischen 110 °C und 165 °C durchgeführt wird.

6. Herstellungsverfahren einer Verbundplatte (10) nach Anspruch 5, **dadurch gekennzeichnet, dass** der Schritt des Temperns des Furniers (14) mit dem Leimfilm (15) bei einer Temperatur zwischen 110 °C und 140 °C durchgeführt wird.

7. Herstellungsverfahren einer Verbundplatte (10) nach einem der vorhergehenden Ansprüche, **dadurch gekennzeichnet, dass** der Schritt des Temperns des Furniers (14) mit dem Leimfilm (15) zwischen 20 Sekunden und 30 Minuten dauert.

8. Herstellungsverfahren einer Verbundplatte (10) nach Anspruch 7, **dadurch gekennzeichnet, dass** der Schritt des Temperns des Furniers (14) mit dem Leimfilm (15) zwischen 2 Minuten und 10 Minuten dauert.

9. Herstellungsverfahren einer Verbundplatte (10) nach einem der vorhergehenden Ansprüche, **dadurch gekennzeichnet, dass** der Schritt des Temperns des Furniers (14) mit dem Leimfilm (15) in einer Heißkompressionspresse bei einem Druck zwischen 12 und 25 bar durchgeführt wird.

10. Herstellungsverfahren einer Verbundplatte (10) nach einem der vorhergehenden Ansprüche, **dadurch gekennzeichnet, dass** der Schritt des Temperns des Furniers (14) und des Leimfilms (15) auf der mindestens einen Schicht (13) aus mit Harz vorimprägniertem Material bei einer Temperatur zwischen 100 °C und 150 °C durchgeführt wird.

11. Herstellungsverfahren einer Verbundplatte (10) nach Anspruch 10, **dadurch gekennzeichnet, dass** der Schritt des Temperns des Furniers (14) und des Leimfilms (15) auf der mindestens einen Schicht (13) aus mit Harz vorimprägniertem Material bei einer Temperatur zwischen 125 °C und 135 °C durchgeführt wird.

12. Herstellungsverfahren einer Verbundplatte (10) nach einem der vorhergehenden Ansprüche, **dadurch gekennzeichnet, dass** der Schritt des Temperns des Furniers (14) und des Leimfilms (15) auf der mindestens einen Schicht (13) aus mit Harz vorimprägniertem Material zwischen 20 und 360 Minuten dauert.

13. Herstellungsverfahren einer Verbundplatte (10) nach Anspruch 12, **dadurch gekennzeichnet, dass** der Schritt des Temperns des Furniers (14) und des Leimfilms (15) auf der mindestens einen Schicht (13) aus mit Harz vorimprägniertem Material zwischen 90 und 120 Minuten dauert.

14. Herstellungsverfahren einer Verbundplatte (10) nach einem der vorhergehenden Ansprüche, **dadurch gekennzeichnet, dass** der Schritt des Temperns des Furniers (14) und des Leimfilms (15) auf der mindestens einen Schicht (13) aus mit Harz vorimprägniertem Material in einer Heißkompressionspresse bei einem Druck zwischen 0,3 und 5 bar durchgeführt wird.

15. Herstellungsverfahren einer Verbundplatte (10) nach einem der Ansprüche 1 bis 13, **dadurch gekennzeichnet, dass** der Schritt des Temperns des Furniers (14) und des Leimfilms (15) auf der mindestens einen Schicht (13) aus mit Harz vorimprägniertem Material in einer Trockenkammer durchgeführt wird.

16. Herstellungsverfahren einer Verbundplatte (10) nach einem der Ansprüche 1 bis 13, **dadurch gekennzeichnet, dass** der Schritt des Temperns des Furniers (14) und des Leimfilms (15) auf der mindestens einen Schicht (13) aus mit Harz vorimprägniertem Material in einem Autoklav durchgeführt wird.

17. Herstellungsverfahren einer Verbundplatte (10) nach einem der vorhergehenden Ansprüche, **dadurch gekennzeichnet, dass** das Furnier (14) aus Holz ist und eine Dicke von einigen Zehntelmillimetern hat.

18. Herstellungsverfahren einer Verbundplatte (10) nach Anspruch 17, **dadurch gekennzeichnet, dass** das Furnier (14) aus Holz eine Dicke zwischen 0,4 mm und 1 mm hat.

19. Herstellungsverfahren einer Verbundplatte (10) nach einem der vorhergehenden Ansprüche, **dadurch gekennzeichnet, dass** zwischen dem Furnier (14) und der Schicht (13) aus vorimprägniertem Material eine Aluminiumfolie (16) mit einer Dicke von einigen Zehntelmillimetern eingefügt ist.

20. Herstellungsverfahren einer Verbundplatte (10) nach Anspruch 19, **dadurch gekennzeichnet, dass** die Aluminiumfolie (16) eine Dicke zwischen 0,05 mm und 0,2 mm hat.

21. Herstellungsverfahren einer Verbundplatte (10) nach einem der vorhergehenden Ansprüche, **dadurch gekennzeichnet, dass** es außerdem einen Schritt der Zugabe eines flammhemmenden Imprägniermittels (17) umfasst.

22. Herstellungsverfahren einer Verbundplatte (10) nach einem der vorhergehenden Ansprüche, **dadurch gekennzeichnet, dass** die Schicht (13) aus vorimprägniertem Material aus Geweben besteht.

23. Herstellungsverfahren einer Verbundplatte (10) nach einem der Ansprüche 1 bis 21, **dadurch gekennzeichnet, dass** die Schicht (13) aus vorimprägniertem Material aus unidirektionalen Schichten besteht.

24. Herstellungsverfahren einer Verbundplatte (10) nach einem der Ansprüche 1 bis 21, **dadurch gekennzeichnet, dass** die Schicht (13) aus vorimprägniertem Material aus Fasern des Typs der folgenden Gruppe besteht: Glas, Hybrid, Kohlenstoff, Aramid, Leinen, Bambus und Hanf.

## Claims

1. Method for producing a composite panel (10), in particular intended for aircraft or nautical furniture, said composite panel (10) comprising a central core (11) formed from a core (12) of the low-density structured material type covered on its two faces with at least one layer (13) of material preimpregnated with resin, with at least one of the faces of said panel (10) being covered with a cladding (14), **characterized in that** it comprises the following two manufacturing steps:
- baking of said cladding (14) with an adhesive film (15), said adhesive film (15) being glued onto one of the faces of said cladding (14); and
- baking of said cladding (14) and of the adhesive film (15) on said at least one layer (13) of material preimpregnated with resin.

2. Method for producing a composite panel (10) according to claim 1, **characterized in that** the gluing of said adhesive film (15) onto one of the faces of said cladding (14) is carried out via hot pressing.

3. Method for producing a composite panel (10) according to claim 1 or 2, **characterized in that** said low-density structured material (12) is of the honeycomb type.

4. Method for producing a composite panel (10) according to claim 1 or 2, **characterized in that** said low-density structured material (12) is of the foam type.

5. Method for producing a composite panel (10) according to one of the preceding claims, **characterized in that** the step of baking of said cladding (14) with said adhesive film (15) is carried out at a temperature between 110°C and 165°C.

6. Method for producing a composite panel (10) according to claim 5, **characterized in that** the step of baking of said cladding (14) with said adhesive film (15) is carried out at a temperature between 110°C and 140°C.

7. Method for producing a composite panel (10) according to one of the preceding claims, **characterized in that** the step of baking of said cladding (14) with said adhesive film (15) is of a duration between 20 seconds and 30 minutes.

8. Method for producing a composite panel (10) according to claim 7, **characterized in that** the step of baking of said cladding (14) with said adhesive film (15) is of a duration between 2 minutes and 10 minutes.

9. Method for producing a composite panel (10) according to one of the preceding claims, **characterized in that** the step of baking of said cladding (14) with said adhesive film (15) is carried out in a hot compression press under a pressure between 12 and 25 bar.

10. Method for producing a composite panel (10) according to one of the preceding claims, **characterized in that** the step of baking of said cladding (14) and of the adhesive film (15) on said at least one layer (13) of material preimpregnated with resin is carried out at a temperature between 100°C and 150°C.

11. Method for producing a composite panel (10) according to claim 10, **characterized in that** the step of baking of said cladding (14) and of the adhesive film (15) on said at least one layer (13) of material preimpregnated with resin is carried out at a temperature between 125°C and 135°C.

12. Method for producing a composite panel (10) according to one of the preceding claims, **characterized in that** the step of baking of said cladding (14) and of the adhesive film (15) on said at least one layer (13) of material preimpregnated with resin is of a duration between 20 and 360 minutes.

13. Method for producing a composite panel (10) according to claim 12, **characterized in that** the step of baking of said cladding (14) and of the adhesive film (15) on said at least one layer (13) of material preimpregnated with resin is of a duration between 90 and 120 minutes.

14. Method for producing a composite panel (10) according to one of the preceding claims, **characterized in that** the step of baking of said cladding (14) and of the adhesive film (15) on said at least one layer (13) of material preimpregnated with resin is carried out in a hot compression press under a pressure between 0.3 and 5 bar.

15. Method for producing a composite panel (10) according to one of claims 1 to 13, **characterized in that** the step of baking of said cladding (14) and of the adhesive film (15) on said at least one layer (13) of material preimpregnated with resin is carried out in an oven.

16. Method for producing a composite panel (10) according to one of claims 1 to 13, **characterized in that** the step of baking of said cladding (14) and of the adhesive film (15) on said at least one layer (13) of material preimpregnated with resin is carried out in an autoclave.

17. Method for producing a composite panel (10) according to one of the preceding claims, **characterized in that** said cladding (14) is made of wood with a thickness of a few tenths of a millimeter.

18. Method for producing a composite panel (10) according to claim 17, **characterized in that** said cladding (14) made of wood is of a thickness between 0.4 mm and 1 mm.

19. Method for producing a composite panel (10) according to one of the preceding claims, **characterized in that** between said cladding (14) and said layer (13) of preimpregnated material is inserted an aluminum film (16) with a thickness of a few tenths of a millimeter.

20. Method for producing a composite panel (10) according to claim 19, **characterized in that** said aluminum film (16) is of a thickness between 0.05 mm and 0.2 mm.

21. Method for producing a composite panel (10) according to one of the preceding claims, **characterized in that** it further comprises the step of adding a flame retardant impregnating agent (17).

22. Method for producing a composite panel (10) according to one of the preceding claims, **characterized in that** said layer (13) of preimpregnated material is comprised of fabrics.

23. Method for producing a composite panel (10) according to one of claims 1 to 21, **characterized in that** said layer (13) of preimpregnated material is comprised of unidirectional sheets.

24. Method for producing a composite panel (10) according to one of claims 1 to 21, **characterized in that** said layer (13) of preimpregnated material is comprised of fibers of the type in the following group: glass, hybrids, carbon, aramid, linen, bamboo and hemp.
